# EUROPEAN PATENT APPLICATION

(11) **EP 1 772 801 A2**
(43) Date of publication of application: **11.04.2007**
(21) Application number: 06016012.4
(22) Date of filing: 01.08.2006
(51) Int. Cl.: G06F 3/048

(54) **Method for searching data in a wireless terminal**

(30) Priority: 07.10.2005 KR 20050094359
(71) Applicant: Samsung Electronics Co., Ltd., Suwon-si, Gyeonggi-Do (KR)
(72) Inventor: Lee, Hye-Mi c/o Samsung Electronics Co., Ltd., Yeongtong-gu Suwon-si Gyeonggi-do (KR)
(74) Representative: Lang, Johannes

(57) **Abstract**

Disclosed is a method for easily searching data displayed in a wireless terminal. The method comprises the steps of: determining if at least two keys are input while data is displayed in the wireless terminal; moving a cursor onto a position of specific data corresponding to consecutive inputs of the keys when the keys are consecutively input; moving the cursor onto a position of first data when a first key of the keys is input; and moving the cursor onto a position of last data when a last key of the keys is input. Also, the method comprises the steps of: determining input of directional keys while data is displayed in the wireless terminal; displaying data of a previous screen when a left key of the directional keys is input; displaying data of a next screen when a right key of the directional keys is input; upwardly moving a cursor onto a position of specific data, when an up key of the directional keys is input; and downwardly moving the cursor onto a position of specific data, when a down key of the directional keys is input.

## Description

### BACKGROUND OF THE INVENTION

### 1. Field of the Invention

The present invention relates to a method for searching data in a wireless terminal. More particularly, the present invention relates to a method for easily searching data displayed in a wireless terminal.

### 2. Description of the Related Art

In general, when performing a data search in a wireless terminal, the user selects data one by one in a specific direction using a directional key.

When it is impossible to display all of the data on a screen in a wireless terminal, a drag bar appears on the screen. In this case, in order to see data which is not displayed on the screen, the user must select data one by one in a predetermined direction by operating directional keys, thereby causing an inconvenience to the user.

Accordingly, there is a need for an improved method for easily searching data displayed in a wireless terminal.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a method for easily searching data displayed in a wireless terminal.

To accomplish this object, in accordance with one aspect of an exemplary embodiment of the present invention, a method for searching data in a wireless terminal is provided. The method comprises the steps of determining if at least two keys are input while data is displayed in the wireless terminal; moving a cursor onto a position of specific data corresponding to consecutive inputs of the keys when the keys are consecutively input; moving the cursor onto a position of first data when a first key of the keys is input; and moving the cursor onto a position of last data when a last key of the keys is input.

According to another aspect of an exemplary embodiment of the present invention, a method for searching data in a wireless terminal is provided. The method comprises the steps of: determining input of directional keys while data is displayed in the wireless terminal; displaying data of a previous screen when a left key of the directional keys is input; displaying data of a next screen when a right key of the directional keys is input; upwardly moving a cursor onto a position of specific data, when an up key of the directional keys is input; and downwardly moving the cursor onto a position of specific data, when a down key of the directional keys is input.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features and advantages of the exemplary embodiments of the present invention will be more apparent from the following detailed description taken in conjunction with the accompanying drawings, in which:
FIG. 1 is a block diagram illustrating the construction of a wireless terminal according to an exemplary embodiment of the present invention;
FIG. 2 is a view illustrating a key input unit shown in FIG. 1;
FIG. 3 is a flowchart illustrating a method for searching data in the wireless terminal according to a first exemplary embodiment of the present invention; and
FIG. 4 is a flowchart illustrating a method for searching data in the wireless terminal according to a second exemplary embodiment of the present invention.

Throughout the drawings, the same drawing reference numerals will be understood to refer to the same elements, features, and structures.

### DETAILED DESCRIPTION OF THE PREFERRED EMBODIMENT

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, description of well-known functions and constructions are omitted for clarity and conciseness.

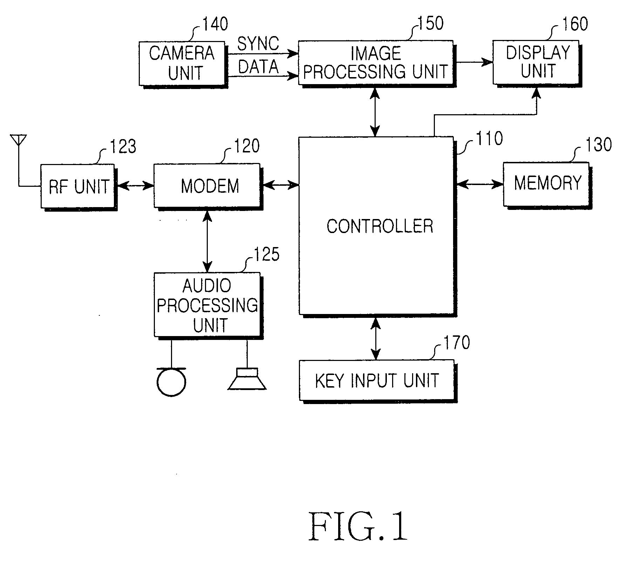

FIG. 1 is a block diagram illustrating the construction of a wireless terminal comprising a camera according to an exemplary embodiment of the present invention. An RF unit 123 performs the wireless communication function of the wireless terminal. The RF unit 123 includes an RF transmitter (not shown) and an RF receiver (not shown). The RF transmitter up-converts and amplifies frequencies of a signal to be transmitted and the RF receiver low-noise amplifies a received signal and down-converts the frequency of the received signal. A modem 120 includes a transmitter for encoding and modulating the signal to be transmitted and a receiver for demodulating and decoding the received signal. An audio processing unit 125 may include a codec, which contains a data codec for processing packet data and the like and an audio codec for processing an audio signal such as a voice signal. The audio processing unit 125 converts a digital audio signal received from the modem 120 into an analog signal by means of the audio codec, thereby reproducing the converted analog signal. Also, the audio processing unit 125 converts an analog audio signal for transmission generated from a microphone into a digital audio signal by means of the audio codec, and transmits the converted digital audio signal to the modem 120. The codec may be constructed separately, or may be included in a controller 110.

A memory 130 may include a program memory and a data memory. The program memory may store programs for controlling the general operation of the wireless terminal and programs for controlling data to be searched through the input of at least two keys and/or directional keys according to an exemplary embodiment of the present invention. The data memory temporarily stores data generated while the programs are executed.

A controller 110 controls the entire operation of the wireless terminal. The controller 110 may include the modem 120 and the codec. Also, according to an exemplary embodiment of the present invention, the controller 110 controls data to be searched based on consecutive input of at least two keys and the number of inputs of a specific key of the at least two keys. In addition, the controller 110 controls data to be searched based on input of each directional key according to an exemplary embodiment of the present invention.

A camera module 140 includes a camera sensor and a signal processing section. The camera sensor photographs an image and converts an optical signal obtained through the photographing into an electric signal. The signal processing section converts an analog image signal obtained through the photographing of the camera sensor into digital data. Herein, it is assumed that the camera sensor is a charge-coupled device (CCD) sensor, and the signal processing section may include a digital signal processor (DSP). Also, the camera sensor and the signal processing section may be integrally or separately constructed.

An image processing unit 150 performs a function to generate image data for displaying an image signal output from the camera module 140. The image processing unit 150 processes an image signal output from the camera module 140, in a unit of frame, and outputs the frame image data to be suitable for the screen size and the properties of a display unit 160. Also, the image processing unit 150 includes a video codec to compress frame image data displayed on the display unit 160 by using a predetermined scheme and to restore original frame image data from compressed frame image data. The video codec may include a JPEG codec, an MPEG4 codec, a Wavelet codec, etc. It is assumed that the image processing unit 150 has an OSD (On Screen Display) function and can output OSD data according to the size of a display screen under the control of the controller 110.

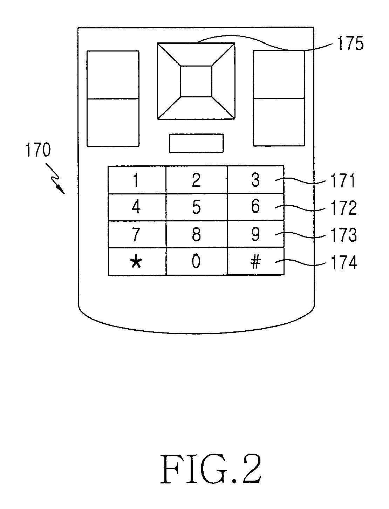

The display unit 160 displays an image signal output from the image processing unit 150 and user data output from the controller 110 on a screen. Herein, the display unit 160 may employ a liquid crystal display (LCD). When the LCD is employed, the display unit 160 may include an LCD controller, a memory for storing image data, an LCD element, etc. When the LCD is utilized in a touch screen scheme, the display unit 160 may serve as an input section. A key input unit 170 includes keys for inputting numeric and character information and function keys for setting various functions. According to an exemplary embodiment of the present invention, the key input unit 170 enables a data search to be performed using the keys for inputting numeric and character information. Also, according to an exemplary embodiment of the present invention, the key input unit 170 enables a data search to be performed through the operation of directional keys from among the function keys for setting various functions. FIG. 2 is a view illustrating the keys for inputting numeric and character information and the function keys for setting various functions, which are included in the key input unit 170.

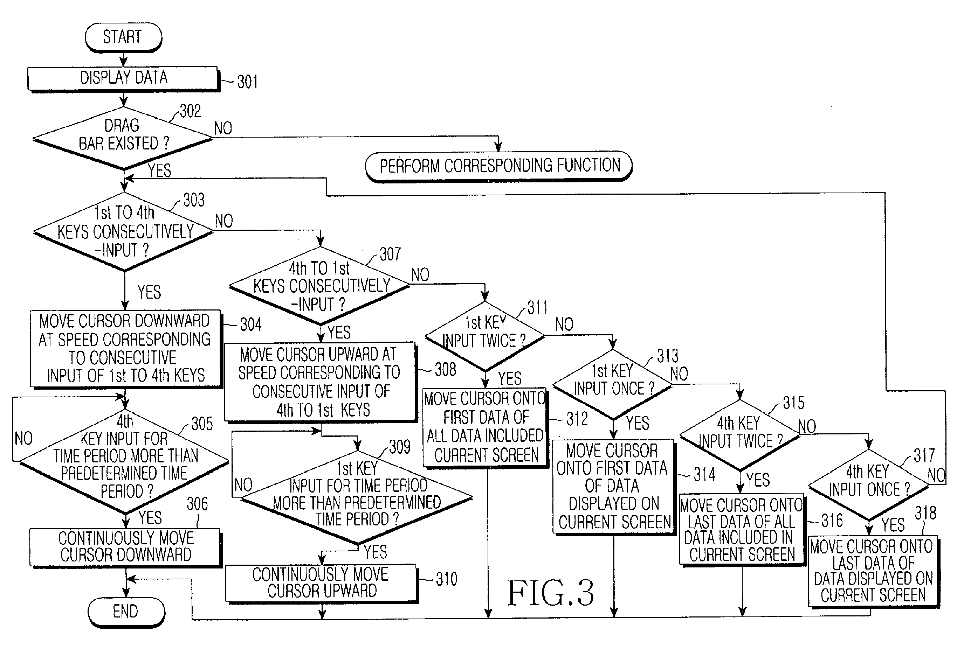

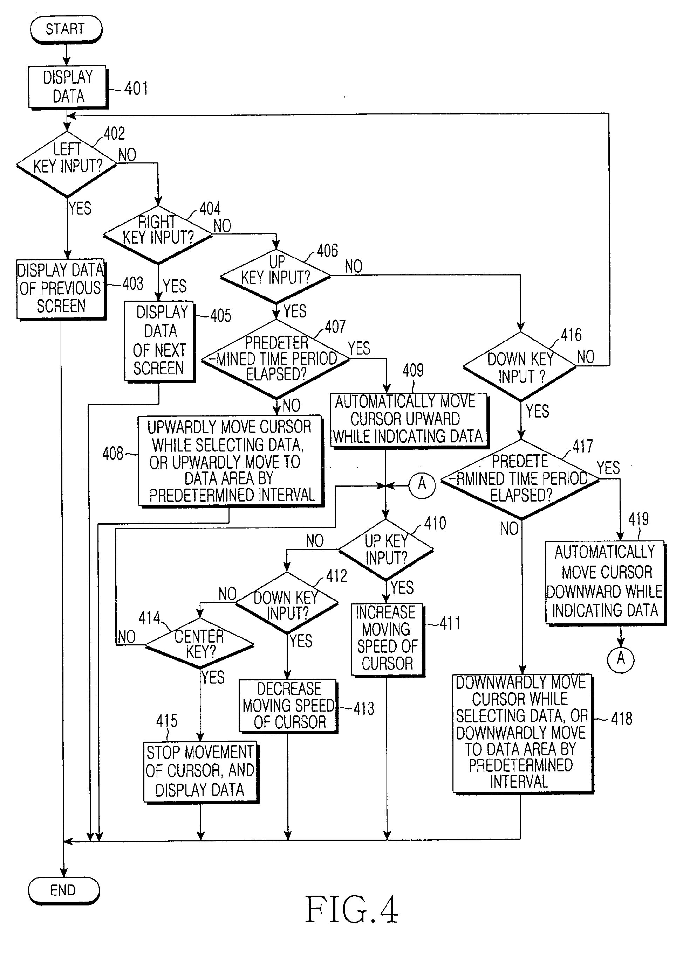

Hereinafter, a method for searching data in the wireless terminal comprising the above-mentioned construction will be described in detail according to FIGs. 3 and 4.

FIG. 3 is a flowchart illustrating a method for searching data in the wireless terminal according to a first exemplary embodiment of the present invention. The method for searching data according to the first exemplary embodiment of the present invention will be described using the 3 key, 6 key, 9 key, and the # key from among the keys for inputting numeric and character information. In the following description, a first key, a second key, a third key, and a fourth key represent the 3 key, 6 key, 9 key, and the # key, respectively. While the first exemplary embodiment of the present invention is described using the 3 key, 6 key, 9 key, and the # key, the method for searching data according to an exemplary embodiment of the present invention can be identically achieved by using the 3 key, 6 key, 9 key, and the # key. The method for searching data according to an exemplary embodiment of the present invention can also be achieved by using the 1 key, 4 key, 7 key, and the * key, or by using the 2 key, 5 key, 8 key, and the 0 key, or by using the 1 key, 2 key, and the 3 key, or by using the 4 key, 5 key, and the 6 key, or by using the 7 key, 8 key, and the 9 key, or by using the * key, 0 key, and the # key.

Hereinafter, the first exemplary embodiment of the present invention will be described in detail with reference to FIGs. 1 to 3.

In step 301, data is displayed on the display unit 160 of the wireless terminal. A drag bar represents the existence of data other than the data currently-displayed on the screen of the display unit 160. When the drag bar appears on the screen in step 301, the controller 110 senses it in step 302 and determines if the first to fourth keys 171 to 174 included in the key input unit 170 are operated.

The consecutive operation of the first to fourth keys 171 to 174 in the designated order during a predetermined time period is sensed by the controller 110. For example, when the first to fourth keys 171 to 174 are consecutively operated from a higher part to a lower part, the controller 110 senses this operation in step 303 and proceeds to step 304. In step 304, the controller 110 controls data other than the data currently-displayed on the screen so that this data is displayed, while moving a cursor downward at a speed corresponding to the operation speed of the consecutively-operated keys 171 to 174.

While the first to fourth keys 171 to 174 are consecutively operated in the designated order during a predetermined time period, when only the fourth key 174 is operated during a predetermined time period, the controller 110 senses it in step 305, and continuously moves the cursor downward in step 306.

The consecutive operation of the first to fourth keys 171 to 174 in the reverse order of the designated order during a predetermined time period is sensed by the controller 110. For example, when the first to fourth keys 171 to 174 are consecutively operated from the lower part to the higher part, the controller 110 senses this operation in step 307 and proceeds to step 308. In step 308, the controller 110 controls data other than the data currently-displayed on the screen so that this data is displayed, while moving a cursor upward at a speed corresponding to the operation speed of the consecutively-operated keys 174 to 171.

While the fourth to first keys 174 to 171 are consecutively operated in the reverse order of the designated order during a predetermined time period, when only the first key 171 is operated during a predetermined time period, the controller 110 senses it in step 309, and continuously moves the cursor upward in step 310.

Also, when the first key 171 of the keys 171 to 174 is operated twice within a predetermined time period, the controller 110 senses it in step 311, and moves the cursor onto the position of the first data of all data included in the current screen (step 312).

When the first key 171 of the keys 171 to 174 is operated once within a predetermined time period, the controller 110 senses it in step 313, and moves the cursor onto the position of the first data of data currently-displayed on the current screen (step 314).

When the fourth key 174 of the keys 171 to 174 is operated twice within a predetermined time period, the controller 110 senses it in step 315, and moves the cursor onto the position of the last data of all data included in the current screen (step 316).

Also, when the fourth key 174 of the keys 171 to 174 is operated once within a predetermined time period, the controller 110 senses it in step 317, and moves the cursor onto the position of the last data of data currently-displayed on the current screen (step 318).

FIG. 4 is a flowchart illustrating a method for searching data in the wireless terminal according to a second exemplary embodiment of the present invention. Data is displayed on the display unit 160 of the wireless terminal in step 401, and it is determined if directional keys 175 included in the key input unit 170 are operated.

When a left key of the directional keys 175 is operated, the controller 110 senses the operation in step 402 and turns a current screen into a previous screen to display corresponding data (step 403). Also, when a right key of the directional keys 175 is operated, the controller 110 senses the right key operation in step 404, and turns a current screen into a next screen to display corresponding data (step 405).

Also, when an up key of the directional keys 175 is operated, the controller 110 senses the operation in step 406, and determines an operation time period of the up key. When the operation time period of the up key is less than a predetermined time period, the controller 110 senses it in step 407, and moves the cursor upward by a predetermined interval when the up key is operated, thereby locating the cursor onto the corresponding data (step 408). In step 408, if the display unit 160 displays an image such as a picture on the screen, the controller 110 may move the cursor upward by a predetermined number of pixels when the up key is operated, so that the cursor indicates an image data located at a specific region of the displayed image. In contrast, when the operation time period of the up key is equal to or greater than the predetermined time period, the controller 110 senses it in step 407, and automatically moves the cursor upward to locate the cursor onto the corresponding data (step 409).

As the cursor automatically moves upward due to an input of the up key continued more than or equal to a predetermined time in step 409, the controller 110 senses the operation of the up key in step 410, and increases the moving speed of the cursor in step 411. Also, while step 409 is performed, when the down key of the directional keys 175 is operated. The controller 110 senses the operation in step 412 and decreases the moving speed of the cursor in step 413. Also, while step 409 is performed, when the center key of the directional keys 175 is operated, the controller 110 senses this operation in step 414, and stops moving the cursor in step 415. The moving speed of the cursor may be increased or decreased in various levels.

Meanwhile, when a down key of the directional keys 175 is operated, the controller 110 senses the operation in step 416, and determines an operation time period of the down key. When the operation time period of the down key is less than a predetermined time period, the controller 110 senses the operation time in step 417, and moves the cursor downward by a predetermined interval when the down key is operated, thereby locating the cursor onto the corresponding data (step 418). In step 418, if an image such as a picture on the screen is displayed on the display unit 160, the controller 110 may move the cursor downward by a predetermined number of pixels when the down key is operated, so that the cursor indicates an image data located at a specific region of the displayed image. In contrast, when the operation time period of the down key is equal to or greater than the predetermined time period, the controller 110 senses it in step 417 and automatically moves the cursor downward to locate the cursor onto the corresponding data (step 419).

As the cursor automatically moves downward due to an input of the down key continued for a time period equal to or more than the predetermined time period in step 419, the controller 110 senses the operation of the up key of the directional keys 175 in step 410 and increases the moving speed of the cursor in step 411. Also, while step 419 is performed, when the down key is operated, the controller 110 senses it in step 412, and decreases the moving speed of the cursor in step 413. Also, while step 419 is performed, when the center key of the directional keys 175 is operated, the controller 110 senses it in step 414, and stops moving the cursor in step 415. The moving speed of the cursor may be increased or decreased in various levels.

According to exemplary embodiments of the present invention as described above, data search in the wireless terminal can be performed using the key input unit, thereby improving convenience of the user during a web search, file viewing, a list search, etc.

While the present invention has been shown and described with reference to certain exemplary embodiments thereof, it will be understood by those skilled in the art that various changes in form and details may be made therein without departing from the spirit and scope of the invention as defined by the appended claims.

## Claims

1. A method for searching data in a wireless terminal, the method comprising the steps of:
determining if at least two keys are input while data is displayed in the wireless terminal;
moving a cursor onto a position of specific data corresponding to consecutive inputs of the at least two keys when the at least two keys are consecutively input;
moving the cursor onto a position of first data when a first key of the at least two keys is input; and
moving the cursor onto a position of last data when a last key of the at least two keys is input.

2. The method as claimed in claim 1, further comprising a step of determining if a drag bar is displayed while the data is displayed in the wireless terminal, wherein the drag bar represents data not currently displayed.

3. The method as claimed in claim 1, wherein the step of moving the cursor onto a position of specific data corresponding to consecutive input of the at least two keys comprises the sub-steps of:
downwardly moving the cursor onto a position of specific data corresponding to consecutive inputs of the at least two keys, which are sequentially input from a first key; and
upwardly moving the cursor onto a position of specific data corresponding to consecutive input of the at least two keys, which are sequentially input in a reverse order from a last key.

4. The method as claimed in claim 3, further comprising a sub-step of continuously moving the cursor downward, when the last key is input during a predetermined time period in the sub-step in which the keys are sequentially input from the first key.

5. The method as claimed in claim 3, further comprising a sub-step of continuously moving the cursor upward, when the first key is input during a predetermined time period in the sub-step in which the keys are reverse-sequentially input from the last key.

6. The method as claimed in claim 1, wherein the step of moving the cursor onto a position of first data comprises the sub-steps of:
determining how many times the first key is input during a predetermined time period when the first key is input;
moving the cursor onto a position of first data of all data included in a current screen when the first key is input at least twice; and
moving the cursor onto a position of first data of data displayed on the current screen when the first key is input once.

7. The method as claimed in claim 1, wherein the step of moving the cursor onto a position of last data comprises the sub-steps of:
determining how many times the last key is input during a predetermined time period when the last key is input;
moving the cursor onto a position of last data of all data included in a current screen when the last key is input at least twice; and
moving the cursor onto a position of last data of data displayed on the current screen when the last key is input once.

8. A method for searching data in a wireless terminal, the method comprising the steps of:
determining input of directional keys while data is displayed in the wireless terminal;
displaying data of a previous screen when a left key of the directional keys is input;
displaying data of a next screen when a right key of the directional keys is input;
upwardly moving a cursor onto a position of specific data, when an up key of the directional keys is input; and
downwardly moving the cursor onto a position of specific data, when a down key of the directional keys is input.

9. The method as claimed in claim 8, wherein the step of upwardly moving the cursor onto a position of specific data comprises the sub-steps of:
determining an input time period of the up key when the up key is input;
continuously moving the cursor upward, when the input time period of the up key is equal to or greater than a predetermined time period; and
upwardly moving the cursor whereby data is selected and whereby the cursor is located onto a specific area of the data when the up key is input, if the up key is continuously input for a time period less than the predetermined time period.

10. The method as claimed in claim 9, further comprising the sub-steps of:
determining input of a key, while continuously moving the cursor upward;
increasing a moving speed of the cursor when the up key is input;
decreasing the moving speed of the cursor when the down key is input; and
stopping movement of the cursor when a center key of the directional keys is input.

11. The method as claimed in claim 8, wherein the step of downwardly moving the cursor onto a position of specific data comprises the sub-steps of:
determining an input time period of the down key when the down key is input;
continuously moving the cursor downward, when the input time period of the down key is equal to or greater than a predetermined time period; and
downwardly moving the cursor whereby data is selected and whereby the cursor is located onto a specific area of the data when the down key is input, if the down key is continuously input for a time period less than the predetermined time period.

12. The method as claimed in claim 11, further comprising the sub-steps of:
determining input of a key, while continuously moving the cursor downward;
increasing a moving speed of the cursor when the up key is input;
decreasing the moving speed of the cursor when the down key is input; and
stopping movement of the cursor when a center key of the directional keys
is input.
